# FASCICULE DE BREVET EUROPEEN

(11) **EP 4 237 664 B1**
(45) Date de publication et mention de la délivrance du brevet: **25.09.2024**
(21) Numéro de dépôt: 21805566.3
(22) Date de dépôt: 13.10.2021
(51) Int. Cl.: F01D 5/14, F01D 9/04, F02K 3/06, F01D 25/16

(54) **ELEMENT DE CARENAGE POUR ENTOURER UN OBSTACLE DANS UN ECOULEMENT DE FLUIDE**
VERKLEIDUNGSELEMENT ZUM UMSCHLIESSEN EINES HINDERNISSES IN EINEM FLUIDSTROM
FAIRING ELEMENT FOR SURROUNDING AN OBSTACLE IN A FLUID FLOW

(30) Priorité: 27.10.2020 FR 2010999
(43) Date de publication de la demande: 06.09.2023
(73) Titulaire: Office National d'Etudes et de Recherches Aérospatiales, 91120 Palaiseau (FR)
(72) Inventeur: BARRIER, Raphaël, 91120 PALAISEAU (FR)
(74) Mandataire: Hautier IP
(86) Numéro de dépôt international: PCT/FR2021/051783
(87) Numéro de publication internationale: WO 2022/090643

(56) Documents cités:
- EP-A1- 3 121 383
- EP-A1- 3 431 708
- DE-A1- 102008 060 847

## Description

### Domaine technique

La présente description concerne un élément de carénage pour entourer un obstacle dans un écoulement fluide, une turbomachine qui incorpore un tel élément, ainsi qu'un procédé de fabrication de l'élément de carénage.

### Technique antérieure

Dans le domaine des guidages d'écoulements de fluides, notamment en aéraulique et plus particulièrement dans le domaine du guidage des écoulements d'air au sein de turbomachines, il est souvent nécessaire de disposer un obstacle dans un écoulement tout en perturbant cet écoulement le moins possible par rapport à une conception nominale de celui-ci. Cette conception nominale peut être l'écoulement à travers une section libre d'un passage, c'est-à-dire en l'absence d'obstacle. Mais l'écoulement nominal peut alternativement être relatif à un passage qui est muni d'un élément utile pour l'écoulement, tel qu'un élément de modification d'une direction de vitesse locale de l'écoulement. Dans tous les cas, l'élément de carénage a la fonction de diviser l'écoulement entre deux côtés de l'obstacle, et cette fonction de division de l'écoulement peut être combinée éventuellement avec celle d'un élément utile qui est initialement prévu dans le passage. Par exemple, l'élément de carénage peut ainsi avoir la double fonction de guider l'écoulement sur deux côtés opposés de l'obstacle, et de modifier une inclinaison de l'écoulement. Tel peut être le cas, notamment, d'un stator de redressement du flux d'air qui traverse une turbomachine, par exemple un moteur d'avion. Selon l'emplacement du stator dans la turbomachine, l'obstacle peut être un support structurel d'une partie de la turbomachine, un arbre de transmission mécanique qui traverse l'écoulement, une canalisation de carburant, un boulon d'attache, etc.

Or un élément de carénage qui est ainsi disposé dans un écoulement perturbe localement le champ de pression au sein de l'écoulement en amont de cet élément de carénage. Cette perturbation du champ de pression peut alors gêner un fonctionnement d'un rotor qui disposé juste avant le stator par rapport au sens de l'écoulement, et par suite dégrader un fonctionnement de la turbomachine. Elle peut aussi provoquer des émissions acoustiques non-désirées, du fait du déplacement rapide du rotor contre les variations spatiales du champ de pression qui sont causées par l'élément de carénage vers l'amont de l'écoulement. Il est alors connu d'introduire une distance de séparation entre le rotor et l'élément de carénage, qui soit suffisante pour réduire l'interaction entre le rotor qui tourne et les altérations du champ de pression qui sont causées vers l'amont par l'élément de carénage. Mais une telle distance de séparation augmente l'encombrement et le poids de la turbomachine, ce qui est particulièrement pénalisant dans le cas d'une turbomachine aéronautique.

Le document FR 2 019 709 décrit un stator de turbomachine qui comporte des éléments de carénage, appelés entretoises et qui sont intercalés entre des aubes voisines du stator. Selon ce document, une surface d'aspiration de chaque entretoise, ou surface d'extrados, est pratiquement plane et parallèle à la direction de circulation de l'air à partir d'un bord d'attaque («leading edge» en anglais) de l'entretoise qui est orienté vers l'amont de l'écoulement. En outre, les aubes du stator sont étagées axialement entre deux éléments de carénage successifs en plus d'être écartées angulairement les unes par rapport aux autres. Toutefois, la forme plane de la partie amont de la surface d'extrados n'est appropriée que si l'angle d'incidence de l'écoulement sur le bord d'attaque est constant tout le long de ce bord d'attaque, et s'il n'y a pas de variations d'une section ni d'un rayon moyen pour le passage de l'écoulement au niveau de l'élément de carénage.

Les documents EP 3 431 708 A1 et DE 10 2008 060847 A1 décrivent des éléments de carénage à disposer autour d'obstacles, qui présentent des surfaces tournées vers l'amont des écoulements considérés, orientées sensiblement perpendiculairement à ces écoulements.

### Problème technique

A partir de cette situation, un but de la présente invention est de réduire encore plus des perturbations de l'écoulement qui sont susceptibles d'être provoquées par l'élément de carénage, par rapport à la conception nominale de l'écoulement.

Notamment, un but de l'invention est de réduire de telles perturbations qui sont causées par l'élément de carénage dans le champ de pression au sein du fluide en amont de cet élément de carénage.

Un autre but de l'invention est de réduire une longueur de l'élément de carénage parallèlement à l'écoulement, pour une taille d'obstacle donnée, sans augmenter les perturbations de l'écoulement qui sont produites par l'élément de carénage.

### Résumé de l'invention

Pour atteindre l'un au moins de ces buts ou un autre, un premier aspect de l'invention propose un nouvel élément de carénage destiné à être placé dans un passage d'écoulement d'un fluide, et à entourer un obstacle qui traverse le passage de sorte que l'élément de carénage guide l'écoulement du fluide sur deux côtés opposés de l'obstacle. Cet élément de carénage est conçu pour des valeurs nominales de plusieurs paramètres de l'écoulement, dont au moins une densité du fluide, des variations respectives d'une section et d'un rayon moyen du passage le long de l'écoulement, un sens de l'écoulement dans le passage, une valeur de vitesse de l'écoulement, et un angle d'incidence de l'écoulement par rapport à l'obstacle en amont de celui-ci. Ces valeurs nominales de l'écoulement peuvent être inscrites dans une notice qui est fournie avec l'élément de carénage, quelle que soit la forme ou le support de cette notice : brochure imprimée, enregistrement sur un support de données tel qu'une carte de mémoire électronique ou un disque à stockage optique ou magnétique, etc. De façon équivalente, ces valeurs nominales peuvent être accessibles par un lien ou une adresse de site consultable à distance, qui est fourni(e) avec l'élément de carénage. En outre, ces valeurs nominales peuvent être présentées sous une forme quelconque : valeurs numériques, graphes, abaques, conditions et/ou paramètres et/ou régime de fonctionnement de la turbomachine dans laquelle passe l'écoulement, etc.

L'élément de carénage possède une surface d'extrados et une surface d'intrados, ainsi qu'un bord d'attaque qui forme une arête de jonction entre les surfaces d'extrados et d'intrados, et qui est destiné à être situé en amont de l'obstacle par rapport à l'écoulement.

Selon l'invention, la surface d'extrados possède une forme adaptée pour produire, au sein d'une partie du fluide qui s'écoule le long de cette surface d'extrados conformément aux valeurs nominales, des variations relatives de pression qui sont inférieures à 5% en valeurs absolues, d'une valeur de pression du fluide dans l'écoulement qui existe au niveau du bord d'attaque. Ces variations de pression sont déterminées entre deux points quelconques de la surface d'extrados qui sont situés entre le bord d'attaque et une zone de l'élément de carénage, appelée zone de transition, où une épaisseur locale de l'élément de carénage entre les surfaces d'extrados et d'intrados est comprise entre 50% et 100% d'une épaisseur maximale de l'obstacle, ces épaisseurs étant mesurées transversalement par rapport à l'écoulement.

Autrement dit, l'invention dédie une partie de la surface d'extrados de l'élément de carénage, en amont de sa zone de transition, à une réduction des altérations du champ de pression que pourrait provoquer l'élément de carénage. Une autre partie de la surface d'extrados, en aval de la zone de transition, peut être dédiée en outre à la production d'une autre fonction par l'élément de carénage, telle qu'une fonction de redressement de l'écoulement. La zone de transition constitue alors un raccordement, de préférence continu, entre les parties amont et aval de la surface d'extrados.

Ainsi, la surface d'extrados est conçue pour provoquer des variations spatiales de pression au sein de l'écoulement qui sont réduites, au moins dans une partie de cette surface d'extrados qui est comprise entre le bord d'attaque et la zone de transition. De cette façon, l'élément de carénage ne provoque que des altérations qui sont limitées pour le champ de pression dans l'écoulement, en direction de l'amont de cet élément de carénage. Le fonctionnement d'un rotor qui peut être disposé juste avant l'élément de carénage par rapport au sens de l'écoulement est donc peu perturbé. Pour la même raison, des émissions acoustiques qui pourraient résulter d'une telle juxtaposition d'un rotor avec l'élément de carénage, sont réduites par l'invention.

De préférence, les variations relatives de pression qui sont produites au sein de la partie du fluide qui s'écoule le long de la surface d'extrados, entre deux points quelconques de cette surface d'extrados qui sont situés entre le bord d'attaque et la zone de transition, peuvent être inférieures à 3%, voire inférieures à 2%, en valeurs absolues, de la valeur de pression du fluide qui existe au niveau du bord d'attaque.

Au sens de l'invention, on entend par surface d'extrados celle des deux surfaces de guidage de l'écoulement de chaque côté de l'élément de carénage, sur laquelle l'écoulement produit une dépression par rapport à l'autre surface de guidage. Lorsque l'invention est utilisée, cette surface d'extrados peut être concave ou convexe entre le bord d'attaque et la zone de transition, le long d'une ligne de courant de l'écoulement qui suit la surface d'extrados. L'autre surface de guidage de l'écoulement, de l'élément de carénage, qui est opposée à sa surface d'extrados, est la surface d'intrados.

De façon générale pour l'invention, la forme de la surface d'extrados peut varier entre des lignes de courant différentes qui passent sur le bord d'attaque le long de cette surface d'extrados. Autrement dit, des valeurs de courbure de la surface d'extrados peuvent être différentes entre deux lignes de courant qui croisent le bord d'attaque en des points différents de ce bord d'attaque, les valeurs de courbure étant mesurées dans des plans parallèles aux lignes de courant et perpendiculaires à la surface d'extrados. La surface d'extrados peut ainsi être une surface gauche - ou non-développable - entre le bord d'attaque et la zone de transition. De cette façon, il est possible d'adapter la partie amont de la surface d'extrados, qui est intermédiaire entre le bord d'attaque et la zone de transition, en fonction de variations qui peuvent exister dans la direction d'incidence de l'écoulement sur le bord d'attaque de l'élément de carénage.

De façon encore générale pour l'invention, une partie au moins de la surface d'extrados, qui est située en aval de la zone de transition, et la surface d'intrados peuvent avoir des formes respectives qui sont adaptées pour produire un changement d'inclinaison de l'écoulement entre deux zones du passage situées en amont et en aval de l'élément de carénage, respectivement. Autrement dit, l'élément de carénage peut avoir une fonction additionnelle de déviation ou de redressement de l'écoulement.

Un second aspect de l'invention concerne une turbomachine comprenant un rotor, un stator et un passage d'écoulement de gaz qui traverse le rotor et le stator, cette turbomachine comprenant en outre au moins un obstacle qui s'étend à travers le passage, et au moins un élément de carénage qui est conforme au premier aspect de l'invention et qui entoure l'obstacle.

Dans des modes préférés de réalisation de l'invention, le stator peut comprendre une pluralité d'aubes de redressement de l'écoulement, qui sont réparties angulairement autour d'un axe du stator, et comprendre en outre l'au moins un élément de carénage. Dans ce cas, les surfaces d'extrados et d'intrados de chaque élément de carénage du stator ont des formes respectives qui sont adaptées pour produire un changement d'inclinaison de l'écoulement entre les zones du passage qui sont en amont et en aval de l'élément de carénage. De plus, les aubes de redressement du stator, en plus d'être décalées angulairement autour de l'axe de ce stator, peuvent être décalées progressivement soit parallèlement à l'axe du stator, c'est-à-dire axialement, soit le long de directions radiales perpendiculaires à l'axe du stator, c'est-à-dire radialement, soit chacune selon une combinaison d'un décalage parallèle à l'axe du stator et d'un autre décalage le long d'une direction radiale perpendiculaire à cet axe du stator, entre la surface d'intrados d'un élément de carénage du stator et la surface d'extrados de l'élément de carénage suivant du stator en tournant progressivement autour de l'axe du stator.

La turbomachine peut notamment être de l'un des types suivants :
- une turbomachine aéronautique, y compris un turboréacteur, un turbopropulseur à double flux ou un turbomoteur à compresseur centrifuge,
- une turbomachine de soufflerie terrestre, ou
- une turbomachine destinée à produire de l'énergie électrique,
où l'élément de carénage est situé soit au niveau d'un compresseur de la turbomachine, soit entre le compresseur et une zone de combustion de la turbomachine, soit au niveau d'une turbine de la turbomachine en aval de la zone de combustion, soit dans un passage secondaire de gaz en aval d'une soufflante qui est destinée à être entraînée en rotation par la turbomachine.

Enfin, un troisième aspect de l'invention propose un procédé de fabrication d'un élément de carénage destiné à être placé dans un passage d'écoulement d'un fluide, et à entourer un obstacle qui traverse le passage de sorte que l'élément de carénage guide l'écoulement du fluide sur deux côtés opposés de l'obstacle. Le procédé de l'invention comprend les étapes suivantes :
/1/ recueillir des valeurs nominales de plusieurs paramètres de l'écoulement, dont au moins une densité du fluide, des variations respectives d'une section et d'un rayon moyen du passage le long de l'écoulement, un sens de l'écoulement dans le passage, une valeur de vitesse de l'écoulement, et un angle d'incidence de l'écoulement par rapport à l'obstacle en amont de celui-ci ;
/2/ déterminer une surface d'extrados et une surface d'intrados de l'élément de carénage, avec un bord d'attaque qui forme une arête de jonction entre les surfaces d'extrados et d'intrados, et qui est destiné à être situé en amont de l'obstacle par rapport à l'écoulement ; et
/3/ fabriquer l'élément de carénage conformément aux surfaces d'extrados et d'intrados déterminées à l'étape /2/.

Selon l'invention, une forme de la surface d'extrados est déterminée à l'étape /2/ pour produire, au sein d'une partie du fluide qui s'écoule le long de cette surface d'extrados conformément aux valeurs nominales recueillies à l'étape /1/, des variations de pression qui sont inférieures à 5% en valeurs absolues, de la valeur de pression du fluide dans l'écoulement qui existe au niveau du bord d'attaque, lorsque les variations de pression sont déterminées entre deux points quelconques de la surface d'extrados qui sont situés entre le bord d'attaque et une zone de l'élément de carénage, appelée zone de transition, où une épaisseur locale de l'élément de carénage entre les surfaces d'extrados et d'intrados est comprise entre 50% et 100% d'une épaisseur maximale de l'obstacle, ces épaisseurs étant mesurées transversalement par rapport à l'écoulement.

Un tel procédé permet de fabriquer un élément de carénage qui est conforme au premier aspect de l'invention.

En particulier, la forme de la surface d'extrados telle que déterminée à l'étape 121 peut résulter d'une combinaison de plusieurs contributions de convexité le long de lignes de courant, dans sa partie qui est située entre le bord d'attaque et la zone de transition, parmi lesquelles :
- une première contribution de convexité, qui est une fonction croissante d'une réduction d'une section du passage de long de l'écoulement ; et
- une seconde contribution de convexité, qui est une autre fonction croissante d'une augmentation d'un rayon moyen du passage le long de l'écoulement.

De façon pratique, à l'étape /2/, une partie amont de la surface d'extrados de l'élément de carénage, qui est située entre le bord d'attaque et la zone de transition, peut être déterminée de la façon suivante :
/a/ déterminer d'abord une trace dans le passage d'écoulement du fluide, pour relier deux parois opposées qui limitent ce passage d'écoulement, la trace déterminée étant destinée à être superposée au bord d'attaque de l'élément de carénage ;
/b/ pour chaque point de la trace, une direction d'une vitesse vectorielle de l'écoulement en ce point, conformément aux valeurs nominales des paramètres de l'écoulement, constitue une direction qui est tangente à la surface d'extrados de l'élément de carénage au niveau du bord d'attaque ; et
/c/ la surface d'extrados de l'élément de carénage est ensuite prolongée de proche en proche à partir du bord d'attaque jusqu'à la zone de transition, pour rester tangente en chaque point à la vitesse vectorielle de l'écoulement au même point, lorsque l'écoulement est encore conforme aux valeurs nominales des paramètres, la partie amont de la surface d'extrados étant ainsi construite jusqu'à la zone de transition.

Pour terminer de déterminer l'élément de carénage, l'étape 121 peut comprendre en outre :
/d/ déterminer une forme de la surface d'extrados dans la zone de transition, ainsi qu'une partie aval de la surface d'extrados, qui est située d'un côté de la zone de transition opposé à la partie amont de la surface d'extrados, et aussi une surface d'intrados de l'élément de carénage, pour entourer l'obstacle.

De préférence, les valeurs nominales des paramètres de l'écoulement du fluide sont définies par un écoulement identifié de ce fluide dans le passage d'écoulement, lorsque ce passage d'écoulement ne comporte pas d'obstacle ni d'élément de carénage.

L'élément de carénage qui est fabriqué conformément au présent troisième aspect de l'invention peut être destiné à être incorporé dans une turbomachine du second aspect de l'invention.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1] est une vue générale d'un moteur aéronautique dans lequel l'invention peut être utilisée ;
[Fig. 2a] est une vue en coupe d'un stator à configuration axiale auquel l'invention peut être appliquée ;
[Fig. 2b] correspond à [Fig. 2a] pour un stator à configuration radiale auquel l'invention peut aussi être appliquée ;
[Fig. 3a] est une vue en perspective d'une réalisation de l'invention pour un stator à configuration axiale ;
[Fig. 3b] est une vue en perspective d'un élément de carénage de la réalisation de l'invention de [Fig. 3a] ;
[Fig. 4] montre des coupes transversales de parties amont de deux éléments de carénage qui sont conformes à l'invention ;
[Fig. 5] montre deux coupes transversales d'un même élément de carénage qui est conforme à l'invention ;
[Fig. 6] est une vue en perspective d'un ensemble rotor-stator à configuration axiale, dont le rotor incorpore des éléments de carénage conformes à l'invention ; et
[Fig. 7] est un schéma d'une réalisation de l'invention pour un stator à configuration radiale.

### Description détaillée de l'invention

Pour raison de clarté, les dimensions des éléments qui sont représentés dans ces figures ne correspondent ni à des dimensions réelles, ni à des rapports de dimensions réels. En outre, des références identiques qui sont indiquées dans des figures différentes désignent des éléments identiques ou qui ont des fonctions identiques.

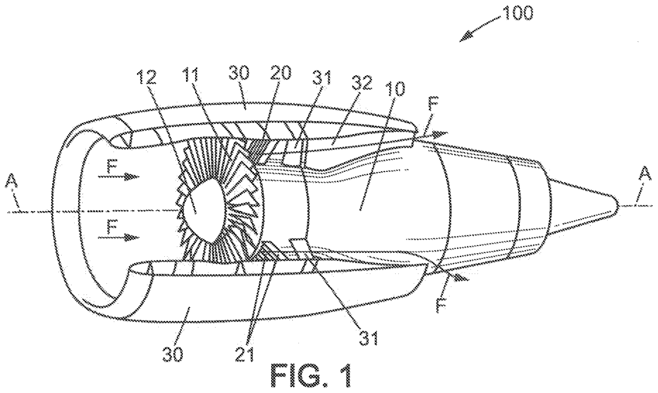

Conformément à [Fig. 1], une turbomachine d'avion 100, du type turbopropulseur à double flux, comprend une partie centrale de moteur 10, une soufflante 11 qui est entraînée en rotation par la partie centrale de moteur 10 en étant montée sur un rotor 12, un stator 20, un carénage périphérique 30 qui entoure la soufflante 11 et le stator 20, et plusieurs bras 31 qui relient chacun le carénage périphérique 30 à la partie centrale de moteur 10. Chaque bras 31 participe à maintenir rigidement le carénage périphérique 30, et pour cela est appelé pylône ou bras structurel. Il possède des dimensions appropriées, notamment une épaisseur tangentielle, c'est-à-dire qui est mesurée tangentiellement par rapport à la rotation de la soufflante 11, pour assurer un maintien rigide du carénage périphérique 30, en évitant que des vibrations excessives soient transmises entre la partie centrale de moteur 10 et le carénage périphérique 30. L'épaisseur de chaque bras est couramment comprise entre 25 mm (millimètre) et 150 mm. Un flux d'air F qui est propulsé par la soufflante 11, couramment appelé flux d'air secondaire, passe entre la partie centrale de moteur 10 et le carénage périphérique 30, de part et d'autre de chaque bras 31. Il est alors essentiel que chaque bras 31 ne perturbe pas, ou perturbe le moins possible, l'écoulement du flux d'air secondaire F. Le même problème technique de réduire une perturbation de l'écoulement du flux d'air secondaire F concerne aussi un ou plusieurs séparateurs d'écoulement 32 qui peuvent être présents en outre entre la partie centrale de moteur 10 et le carénage périphérique 30.

Le stator 20 est situé entre la soufflante 11 et les bras 31 le long de l'écoulement du flux d'air secondaire F. Sa fonction est de réduire ou supprimer une composante tangentielle de la vitesse du flux d'air secondaire F qui a été générée par la soufflante 11. Autrement dit, la fonction du stator 20 est de redresser l'écoulement du flux F. De façon connue, le stator 20 comprend une multiplicité d'aubes fixes 21, ou OGV pour «outlet guide vane» en anglais, qui sont réparties angulairement autour de l'axe de rotation A-A de la soufflante 11. Chaque aube 21 du stator 20 possède deux surfaces de guidage qui sont opposées et reliées par un bord d'attaque à arête, ce dernier étant orienté vers l'amont de l'écoulement du flux d'air secondaire F. Dans des sections transversales de chaque aube 21, le bord d'attaque forme le sommet d'un angle de convergence l'une vers l'autre des deux surfaces de guidage de l'aube. Les surfaces de guidage de chaque aube 21 guident ainsi tangentiellement deux parties du flux d'air secondaire F qui passent de part et d'autre de cette aube. L'une des deux surfaces de guidage est une surface d'extrados, et l'autre surface de guidage est une surface d'intrados.

Il est alors connu que chaque bras 31 ou séparateur 32 qui est situé à distance du stator 20, séparément des aubes 21 de celui-ci, provoque une distorsion des champs de vitesse et de pression du flux d'air secondaire F qui se prolonge vers l'amont de l'écoulement d'air jusqu'à la soufflante 11. De telles distorsions de l'écoulement du flux d'air F sont alors susceptibles de gêner le fonctionnement de la turbomachine 100. Plus particulièrement, la distorsion des champs de vitesse et de pression du flux d'air secondaire F peut provoquer une dégradation des performances de la turbomachine 100, notamment de son rendement et de son opérabilité, une réduction de sa résistance mécanique et une augmentation des nuisances acoustiques qui sont générées par la soufflante 11. De plus, l'encombrement qui est dû aux bras 31 et/ou aux séparateurs 32, lorsque ces bras ou séparateurs sont indépendants du stator 20, contribue à augmenter la longueur totale de la turbomachine 100, et donc son poids.

Une méthode qui a été envisagée pour réduire ces perturbations causées par les bras 31 ou séparateurs 32 consiste à fusionner une aube 21 avec un bras 31, en ajoutant un segment de pontage intermédiaire. Toutefois, dans les réalisations existantes d'un tel élément de redressement d'écoulement qui est combiné avec la fonction de carénage d'un bras structurel, la partie amont de cet élément génère encore des distorsions des champs de vitesse et de pression de l'écoulement qui sont susceptibles de perturber le fonctionnement de la soufflante 11.

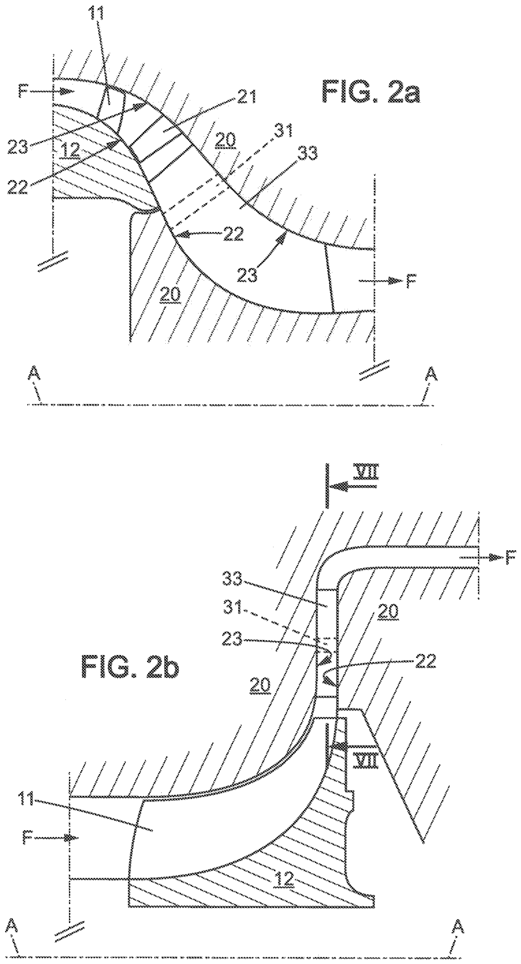

Bien que l'utilisation d'un tel élément, aux fonctions combinées de redressement d'écoulement et de carénage d'obstacle, vienne d'être décrite dans le cadre d'un stator de soufflante de turbopropulseur, des utilisations similaires peuvent être mises en oeuvre au niveau d'un compresseur de la turbomachine 100, ou entre le compresseur et la zone de combustion de la turbomachine 100, ou encore au niveau d'une turbine de celle-ci. En fonction de chaque utilisation, la nature de l'obstacle ainsi que la configuration du passage de l'air en écoulement peut varier. Des exemples d'obstacles ont déjà été donnés dans la partie générale de la présente description. Pour un stator de soufflante, de compresseur ou de turbine, l'écoulement aéraulique est peu incliné localement par rapport à l'axe du rotor. Par contre, dans le cas d'un stator de compresseur centrifuge, l'écoulement aéraulique peut être radial divergent. [Fig. 2a] et [Fig. 2b] illustrent ces deux types de configurations, dites axiale et radiale, respectivement. De façon générale, la référence 11 désigne les aubes du rotor 12, A-A désigne encore l'axe commun du rotor 12 et du stator 20, et les références 22 et 23 désignent les deux parois opposées qui limitent le passage de l'écoulement d'air au niveau du stator 20. Les aubes 21 du stator 20 sont donc sensiblement perpendiculaires aux deux parois 22 et 23, de même que les surfaces d'éléments de carénage conformes à l'invention qui sont intégrés au stator 20. La référence 31 désigne un obstacle qui est situé dans l'écoulement F, et la référence 33 désigne un élément de carénage qui est conforme à l'invention et qui entoure l'obstacle 31. Par la suite, on utilise un système de coordonnées cylindriques dont le plan à coordonnées polaires est perpendiculaire à l'axe A-A, et l'axe de coordonnée cartésienne est superposé à l'axe A-A. Ainsi, la direction axiale est celle de l'axe A-A, et une direction radiale quelconque coupe perpendiculairement l'axe A-A en étant repérée par un angle θ autour de l'axe A-A selon le système de coordonnée polaire.

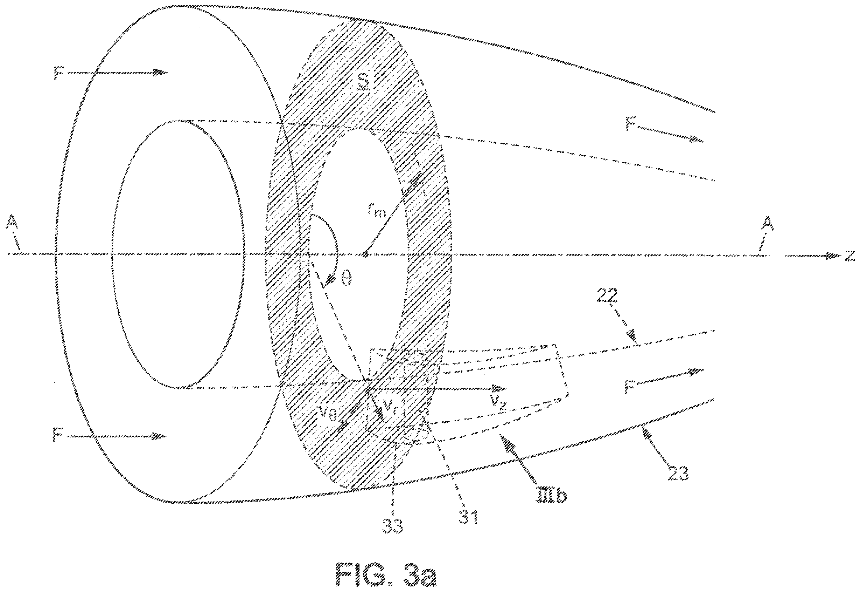

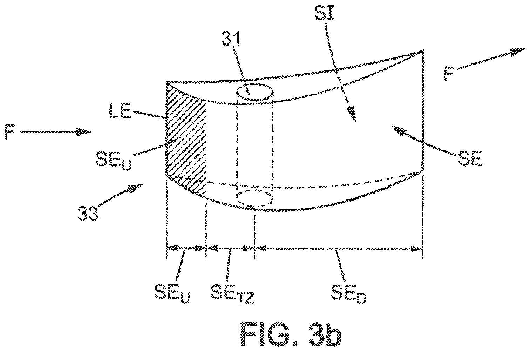

L'invention est maintenant présentée dans le cas d'une configuration axiale, en référence à [Fig. 3a] et [Fig. 3b]. De façon usuelle, la section de passage de l'écoulement F dans un plan de coupe qui est perpendiculaire à l'axe A-A désigne la surface qui est comprise entre les parois 22 et 23 à l'intérieur de ce plan. Elle peut varier lorsque le plan de coupe est déplacé le long de l'axe A-A, en augmentant ou en diminuant selon la conception de la turbomachine 100. Indépendamment et simultanément, le rayon moyen du passage de l'écoulement F, mesuré radialement à partir de l'axe A-A, peut aussi augmenter ou diminuer lors du déplacement du plan de coupe le long de l'axe A-A. Dans [Fig. 3a], la section de passage est désignée par S et le rayon moyen de passage est désigné par rₘ.

Les autres notations qui sont utilisées dans [Fig. 3b] ont les significations suivantes :
LE : bord d'attaque de chaque élément de carénage 33
SE : surface d'extrados de chaque élément de carénage 33
SI : surface d'intrados de chaque élément de carénage 33
SE_{U} : partie amont de chaque surface d'extrados SE
SE_{D} : partie aval de chaque surface d'extrados SE
SE_{TZ} : zone de transition de chaque surface d'extrados SE.

Des valeurs nominales de l'écoulement F au niveau du stator 20 sont définies par l'écoulement de l'air tel qu'il résulte d'un régime de fonctionnement identifié pour la turbomachine 100, lorsque le stator 20 ne comporte pas d'élément de carénage 33. Ces valeurs nominales, qui caractérisent un régime d'écoulement pris pour référence, déterminent notamment la vitesse de l'air au niveau d'une extrémité amont d'un élément de carénage qui est destiné à être incorporé dans le stator 20, avec l'orientation de cette vitesse, pour chaque point de la section de passage correspondante. Cette vitesse d'air possède une composante axiale, v_{z}, qui est parallèle à l'axe A-A, une composante radiale, vᵣ, qui est orientée radialement et perpendiculairement à l'axe A-A, et une composante tangentielle, ve, qui est orientée perpendiculairement aux directions axiale et radiale à l'endroit où cette vitesse est caractérisée.

Selon l'invention, la partie amont SEu de la surface d'extrados SE d'un élément de carénage 33 qui est disposé dans le passage d'écoulement peut être déterminée de la façon suivante :
/a/ une trace est d'abord déterminée dans le passage d'écoulement, pour relier les parois 22 et 23, en étant destinée à être superposée au bord d'attaque LE de l'élément de carénage 33 ;
/b/ pour chaque point de cette trace, une direction de la vitesse vectorielle de l'écoulement F en ce point, conformément aux valeurs nominales de cet écoulement, constitue une direction qui est tangente à la surface d'extrados SE de l'élément de carénage 33 au niveau du bord d'attaque LE ;
/c/ la surface d'extrados SE de l'élément de carénage 33 est alors prolongée de proche en proche à partir de son bord d'attaque LE jusqu'à sa zone de transition SE_{TZ}, pour rester tangente en chaque point à la vitesse vectorielle de l'écoulement F au même point, lorsque cet écoulement est encore conforme aux valeurs nominales. La partie amont SEu de la surface d'extrados SE est ainsi construite jusqu'à la zone de transition SE_{TZ} ; puis
/d/ la partie aval SE_{D} de la surface d'extrados SE, ainsi que la zone de transition SE_{TZ} entre cette partie aval SE_{D} et la partie amont SEu de la surface d'extrados SE telle construite à l'étape /c/, et aussi la surface d'intrados SI sont déterminées pour entourer l'obstacle 31.

Les inventeurs ont découvert que la construction de la partie amont de la surface d'extrados conformément aux étapes /a/ à /c/ réduisait l'altération du champ de pression de l'écoulement qui est provoquée par l'élément de carénage, par rapport aux valeurs nominales. En outre, cette réduction est suffisante lorsque la construction est prolongée jusqu'à une cote sur l'axe A-A où l'épaisseur de l'élément de carénage tel que complété à l'étape /d/, est au moins égale à 50% de l'épaisseur de l'obstacle.

Les inventeurs ont aussi découvert que cette construction de la partie amont de la surface d'extrados garantissait que la pression de l'air dans l'écoulement en présence de l'élément de carénage, reste sensiblement identique sur la partie amont de la surface d'extrados à ses valeurs en l'absence de l'élément de carénage et de l'obstacle, lorsque les conditions de production de l'écoulement sont identiques à celles des valeurs nominales. Une limite supérieure de 5%, préférablement 3% ou mieux 2%, pour les variations de pression qui existent dans la partie amont de la surface d'extrados par rapport à la valeur nominale de pression sur le bord d'attaque, garantit que les perturbations causées par l'élément de carénage en amont de celui-ci ne sont pas gênantes, même lorsqu'un rotor est disposé en amont de l'élément de carénage en en tant proche.

Les inventeurs ont encore découvert que l'évolution de la section de passage S et du rayon moyen rₘ en fonction de la cote z sur l'axe A-A, à l'emplacement de la partie amont de la surface d'extrados, déterminent la courbure de cette partie amont de surface d'extrados le long des lignes de courant. Notamment, la partie amont de surface d'extrados présente une convexité qui est d'autant plus grande que la section de passage S diminue dans le sens de l'écoulement F à l'emplacement de cette partie amont de surface d'extrados. Cette première variation résulte d'une conservation du débit de l'écoulement F parallèlement à l'axe A-A.

En outre, la convexité de la partie amont de surface d'extrados est d'autant plus grande que le rayon moyen de passage rₘ augmente dans le sens de l'écoulement F à l'emplacement de cette partie amont de surface d'extrados. Cette seconde variation résulte d'une conservation du moment cinétique de l'écoulement F en se déplaçant parallèlement à l'axe A-A, lorsqu'il possède une composante de rotation non-nulle en amont de l'élément de carénage.

En fait, les deux variations de la convexité de la surface d'extrados SE dans sa partie amont SEu se combinent l'une avec l'autre, et possiblement aussi avec d'autres contributions qui résultent de causes différentes, telles que par exemple une variation de température de l'air parallèlement à l'axe A-A, ou des effets de viscosité de l'air. Ainsi, les étapes /b/ et /c/ indiquées ci-dessus permettent d'optimiser la partie amont de chaque surface d'extrados pour prendre en compte des variations de section de passage et de rayon moyen de passage qui peuvent être présentes au niveau de cette partie amont de surface d'extrados.

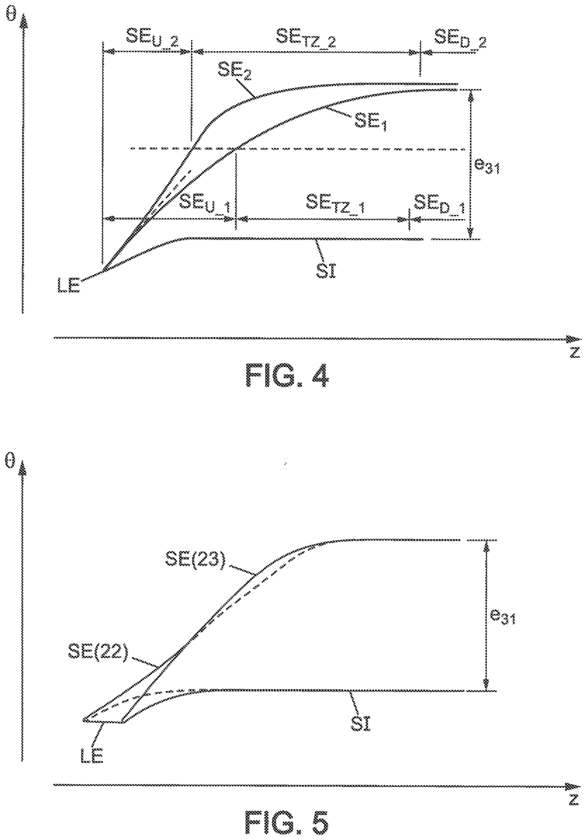

[Fig. 4] est un diagramme qui superpose les sections transversales de deux éléments de carénage conformes à l'invention, telles que ces sections apparaissent dans une surface cylindrique d'axe A-A. L'axe horizontal de ce diagramme est l'axe z, et l'axe vertical est l'angle polaire θ. Les deux éléments de carénage ont le même bord d'attaque LE et la même surface d'intrados SI. Les références qui sont relatives séparément à la surface d'extrados de chaque élément de carénage sont complétées par l'indice 1 ou l'indice 2, respectivement. La surface d'extrados SE₁ du premier élément de carénage est convexe dans sa partie amont, notée SE_{U_1}, correspondant à un effet prépondérant d'une réduction de la section de passage S, alors que surface d'extrados SE₂ du second élément de carénage est concave dans la partie amont correspondante de surface d'extrados, notée SE_{U_2}. Le second élément de carénage correspond à un effet prépondérant d'une réduction du rayon moyen de passage rₘ. Les deux parties amont des surfaces d'extrados SE_{U_1} et SE_{U_2} qui sont représentées dans [Fig. 4] correspondent à une même direction d'incidence de l'écoulement F au niveau du bord d'attaque LE, telle qu'indiquée par le segment rectiligne en trait interrompu. Cette direction d'incidence est celle qui est stipulée par les valeurs nominales de l'écoulement F. Pour ces deux exemples, la limite entre la partie amont SE_{U_1} (respectivement SE_{U_2}) et la zone de transition SE_{TZ_1} (resp. SE_{TZ_2}) de la surface d'extrados SE₁ (resp. SE₂) est choisie pour correspondre à environ 60% de l'épaisseur angulaire e₃₁ de l'obstacle 31 qui est destiné à être contenu dans chaque élément de carénage. En fonction de la conception de la turbomachine 100 à laquelle l'invention est appliquée, et en fonction de la nature de l'obstacle 31, son épaisseur peut varier entre quelques millimètres et 150 mm. Comme cela apparaît dans [Fig. 4], la partie amont de surface d'extrados SE_{U_2} est plus courte que celle SE_{U_1}, parallèlement à l'axe A-A. L'encombrement longitudinal d'un élément de carénage qui possède la surface d'extrados SE₂ peut donc être réduit, par rapport à l'utilisation de la surface d'extrados SE₁. Cette réduction de longueur de l'élément de carénage, qui est procurée par la concavité de la partie amont de surface d'extrados, se cumule avec une autre réduction possible de la longueur totale de la turbomachine qui résulte de la fusion d'une aube de stator avec l'élément de carénage qui entoure d'obstacle.

Pour un élément de carénage conforme à l'invention, l'étape /b/ qui a été indiquée plus haut est exécutée séparément à partir de plusieurs points du bord d'attaque LE. La courbure qui en résulte à l'étape /c/ pour la partie amont de surface d'extrados SEu peut alors varier entre des lignes de courant de l'écoulement F qui passent par des points différents du bord d'attaque LE, pour le même élément de carénage. [Fig. 5] montre ainsi deux profils de surface d'extrados d'un même élément de carénage conforme à l'invention : l'un désigné par SE(22) à utiliser au niveau de la paroi 22, et l'autre désigné par SE(23) à utiliser au niveau de la paroi 23. [Fig. 5] montre aussi que le bord d'attaque LE est plus reculé vers l'aval de l'écoulement F au niveau de la paroi 23 qu'au niveau de la paroi 22. En outre, la partie amont de surface d'extrados au niveau de la paroi 22 est légèrement convexe alors que celle au niveau de la paroi 23 est légèrement concave. La partie amont de la surface d'extrados SEu est alors une surface non-développable. Les axes horizontal et vertical de [Fig. 5] sont les mêmes que ceux de [Fig. 4], et la surface d'intrados SI est la même au niveau des deux parois 22 et 23.

Un élément de carénage 33 conforme à l'invention peut être isolé au sein de la turbomachine 100, par exemple pour entourer une transmission de démarreur entre un moteur électrique de démarrage qui est situé à l'extérieur de la paroi 23 et le rotor 12 qui est situé à l'intérieur de la paroi 22.

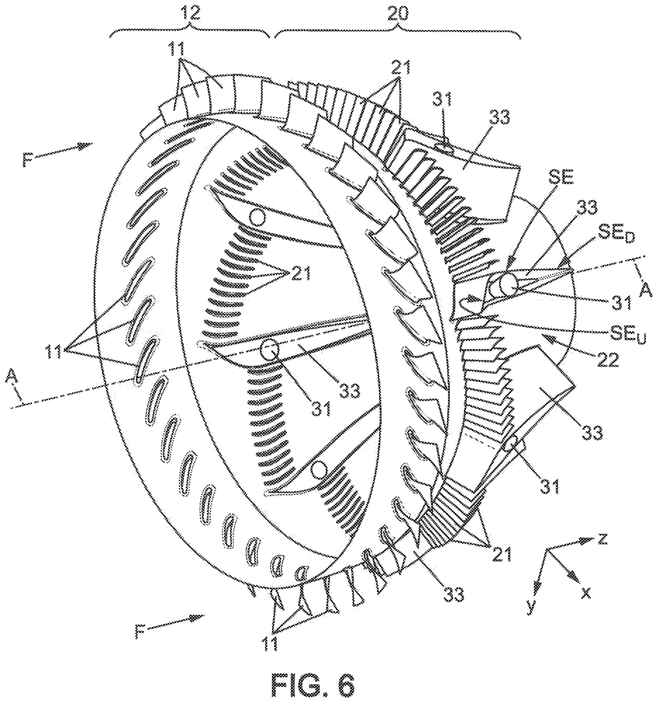

Alternativement, un élément de carénage 33 conforme à l'invention peut être intégré à un stator de turbomachine qui est disposé en aval d'une couronne d'aubes de rotor. Un tel stator produit une fonction de redressement d'écoulement. Le stator 20 de [Fig. 6] possède une configuration axiale, et est pourvu d'une pluralité d'aubes 21 qui sont étagées angulairement autour de l'axe A-A. Selon l'invention, le stator 20 peut être pourvu en outre d'un élément de carénage 33 tel que décrit précédemment, ou pourvu de plusieurs tels éléments de carénage 33. Par exemple, huit éléments de carénage 33 peuvent être répartis à équidistance angulairement dans le stator 20, parmi les aubes 21 de celui-ci. Plusieurs aubes 21, par exemple douze aubes 21, peuvent être intermédiaires entre deux éléments de carénage 33 qui sont successifs angulairement autour de l'axe A-A au sein du stator 20. Chaque élément de carénage 33 a pour première fonction d'entourer un obstacle 31 auquel cet élément de carénage est dédié. Pour cela, et dans le but de perturber peu ou le moins possible le champ de pression au niveau du rotor 12, chaque surface d'extrados SE est conçue conformément à l'invention pour sa partie amont SEu. Sa partie aval SE_{D} est alors conçue pour produire la fonction de redressement d'écoulement en cohérence avec les aubes 21.

De préférence, les aubes 21 du stator 20 peuvent être décalées axialement entre aubes successives, en plus d'être décalées angulairement, comme cela est visible dans [Fig. 6]. Ainsi, deux aubes 21 qui sont successives autour de l'axe A-A possèdent entre elles au moins les deux composantes de décalage suivantes : une composante de décalage angulaire autour de l'axe A-A, et une composante de décalage axial qui est parallèle à l'axe A-A. Ainsi, les aubes 21 d'une même série qui est intermédiaire entre deux éléments de carénage 33 peuvent être alignées obliquement entre une partie amont de la surface d'intrados SI de l'un de ces deux éléments de carénage 33, à proximité de son bord d'attaque LE, et une partie qui est plus reculée vers l'aval de l'écoulement F, de la surface d'extrados SE de l'autre élément de carénage 33, par exemple sa zone de transition SE_{TZ}.

En particulier dans un cas où le passage de l'écoulement F présente une variation de son rayon moyen rₘ au niveau du stator 20, les aubes 21 d'une même série qui est intermédiaire entre deux éléments de carénage 33 peuvent être en plus décalées entre deux aubes successives selon une composante de décalage supplémentaire, qui est radiale. Lorsque les parois 22 et 23 sont localement coniques dans un même sens, une telle composante radiale de décalage peut être une conséquence de la composante axiale de décalage, comme cela apparaît dans [Fig. 6].

A titre de comparaison, l'utilisation du stator 20 de [Fig. 6] à la place d'un stator antérieur tel que connu avant la présente invention, a permis de réduire de 75% des efforts instationnaires qui s'exercent sur le rotor 12, et d'améliorer de 1% le rendement global du compresseur. Dans le stator antérieur qui est utilisé comme référence pour cette comparaison, les éléments de carénage qui entourent les obstacles 31 ne sont pas fusionnés avec certaines des aubes 21 de ce stator antérieur, et les parties amont des surfaces d'extrados des éléments de carénage n'ont pas de courbure telle que prévue par l'invention. A partir d'un tel stator antérieur, fusionner les éléments de carénage avec certaines des aubes 21 du stator 20, en utilisant des parties amont de surfaces d'extrados qui sont planes pour ces éléments de carénage, ne réduit que de 35% les efforts instationnaires qui s'exercent sur le rotor 12, et ne réduit simultanément que de 0,5% le rendement global du compresseur.

Une fois conçu géométriquement selon l'invention, chaque élément de carénage, ou un stator qui incorpore au moins un de ceux-ci, peut être fabriqué selon l'une des méthodes connues de l'Homme du métier, appropriée en fonction de l'emplacement auquel se trouve(nt) le (les) élément(s) de carénage concerné(s) au sein de la turbomachine.

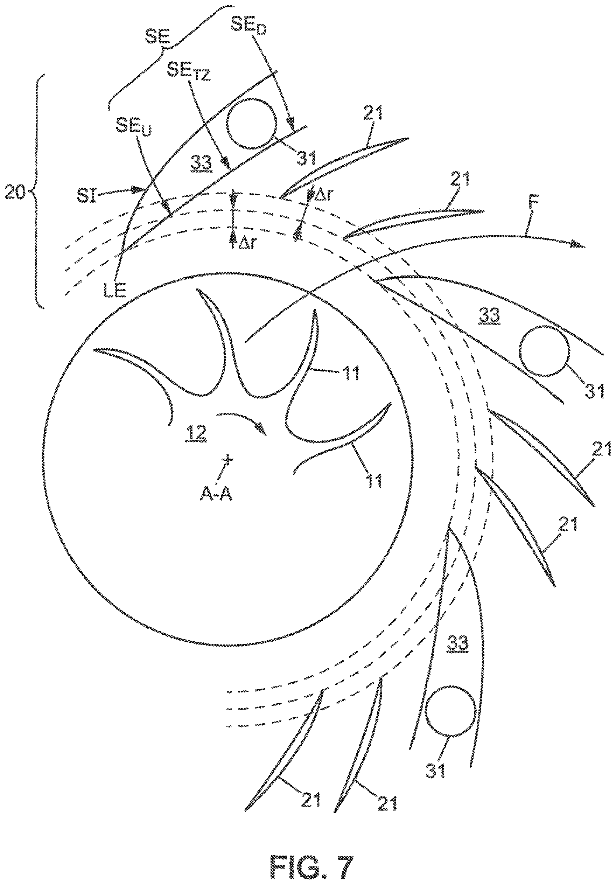

L'invention peut aussi être appliquée à un stator qui possède une configuration radiale, par exemple telle que représentée dans [Fig. 2b]. Une telle configuration est utilisée par exemple dans un compresseur à basse-pression, notamment un compresseur de turbomoteur de petite taille. Dans ce cas, le stator 20 forme une couronne périphérique qui est disposée radialement autour du rotor 12, en étant coaxial avec ce dernier selon l'axe A-A. Comme illustré par [Fig. 7] qui est une vue dans un plan perpendiculaire à l'axe A-A, le stator 20 peut comporter plusieurs éléments de carénage 33 qui sont répartis angulairement autour de l'axe A-A, chacun autour d'un obstacle 31 différent. Le plan de coupe de [Fig. 7] est indiqué dans [Fig. 2b]. Le bord d'attaque LE de chaque élément de élément de carénage 33 peut alors être sensiblement parallèle à l'axe A-A, et sa partie amont de surface d'extrados SEu est conforme à la présente invention. De même que précédemment, plusieurs guides de redressement d'écoulement 21, par exemple deux guides 21, peuvent être intercalés au sein du stator 20 à configuration radiale entre deux éléments de carénage 33 qui sont successifs autour de l'axe A-A. Ces deux guides 21 peuvent alors présenter des décalages radiaux Δr progressifs, par exemple à partir du bord d'attaque LE de l'un des éléments de carénage 33 en direction de la zone de transition SE_{TZ} de la surface d'extrados SE de l'élément de carénage 33 suivant.

Il est entendu que l'invention peut être reproduite en modifiant des aspects secondaires des modes de réalisation qui ont été décrits en détail ci-dessus, tout en conservant certains au moins des avantages cités. Notamment, il est rappelé que l'invention est applicable à un élément de carénage quelconque qui est disposé dans un passage de fluide, quelle que soit la turbomachine qui incorpore ce passage de fluide et quel que soit l'emplacement de cet élément de carénage au sein de cette machine. Notamment, elle est particulièrement avantageuse pour des éléments de carénage qui sont situés dans le circuit primaire, ou dans le circuit secondaire, de turbomachines aéronautiques.

## Revendications

1. Elément de carénage (33) destiné à être placé dans un passage d'écoulement d'un fluide, et destiné à entourer un obstacle (31) qui traverse le passage de sorte que l'élément de carénage guide l'écoulement du fluide sur deux côtés opposés de l'obstacle,
l'élément de carénage (33) étant conçu pour des valeurs nominales de plusieurs paramètres de l'écoulement, dont au moins une densité du fluide, des variations respectives d'une section (S) et d'un rayon moyen (rₘ) du passage le long de l'écoulement, un sens de l'écoulement dans le passage, une valeur de vitesse de l'écoulement, et un angle d'incidence de l'écoulement par rapport à l'obstacle (31) en amont dudit obstacle,
l'élément de carénage (33) possédant une surface d'extrados (SE) et une surface d'intrados (SI), et un bord d'attaque (LE) qui forme une arête de jonction entre les surfaces d'extrados et d'intrados, et qui est destiné à être situé en amont de l'obstacle (31) par rapport à l'écoulement,
l'élément de carénage (33) étant **caractérisé en ce que** la surface d'extrados (SE) possède une forme adaptée pour produire, au sein d'une partie du fluide qui s'écoule le long de ladite surface d'extrados conformément aux valeurs nominales, des variations de pression qui sont inférieures à 5% en valeurs absolues, d'une valeur de pression du fluide dans l'écoulement qui existe au niveau du bord d'attaque (LE), lorsque lesdites variations de pression sont déterminées entre deux points quelconques de la surface d'extrados qui sont situés entre le bord d'attaque et une zone de l'élément de carénage, appelée zone de transition (SE_{TZ}), où une épaisseur locale dudit élément de carénage entre les surfaces d'extrados (SE) et d'intrados (SI) est comprise entre 50% et 100% d'une épaisseur maximale (e₃₁) de l'obstacle (31), lesdites épaisseurs étant mesurées transversalement par rapport à l'écoulement.

2. Elément de carénage (33) selon la revendication 1, dans lequel la surface d'extrados (SE) est concave ou convexe entre le bord d'attaque (LE) et la zone de transition (SE_{TZ}), le long d'une ligne de courant de l'écoulement qui suit ladite surface d'extrados.

3. Elément de carénage (33) selon la revendication 1 ou 2, dans lequel des valeurs de courbure de la surface d'extrados (SE) sont différentes entre deux lignes de courant qui croisent le bord d'attaque (LE) en des points différents dudit bord d'attaque, lesdites valeurs de courbure étant mesurées dans des plans parallèles aux lignes de courant et perpendiculaires à la surface d'extrados.

4. Elément de carénage (33) selon l'une quelconque des revendications précédentes, dans lequel une partie au moins de la surface d'extrados (SE), qui est située en aval de la zone de transition (SE_{TZ}), et la surface d'intrados (SI) ont des formes respectives qui sont adaptées pour produire un changement d'inclinaison de l'écoulement entre une première zone du passage en amont de l'élément de carénage et une seconde zone du passage en aval dudit élément de carénage.

5. Elément de carénage (33) selon l'une quelconque des revendications précédentes, dans lequel la forme de la surface d'extrados (SE) est adaptée de sorte que les variations de pression qui sont produites au sein de la partie du fluide qui s'écoule le long de ladite surface d'extrados, entre deux points quelconques de la surface d'extrados qui sont situés entre le bord d'attaque (LE) et la zone de transition (SE_{TZ}), soient inférieures à 3%, de préférence inférieures à 2%, en valeurs absolues, de la valeur de pression du fluide dans l'écoulement qui existe au niveau du bord d'attaque.

6. Turbomachine (100) comprenant un rotor (12), un stator (20) et un passage d'écoulement de gaz qui traverse le rotor et le stator, ladite turbomachine comprenant en outre au moins un obstacle (31) qui s'étend à travers le passage, et au moins un élément de carénage (33) qui est conforme à l'une quelconque des revendications précédentes et qui entoure l'obstacle.

7. Turbomachine (100) selon la revendication 6, dans laquelle le stator (20) comprend une pluralité d'aubes (21) de redressement de l'écoulement, qui sont réparties angulairement autour d'un axe (A-A) du stator, et comprend en outre l'au moins un élément de carénage (33), chaque élément de carénage du stator étant conforme à la revendication 4,
et dans laquelle les aubes (21) de redressement du stator (20), en plus d'être décalées angulairement autour de l'axe dudit stator, sont décalées progressivement soit parallèlement à l'axe (A-A) dudit stator, soit le long de directions radiales perpendiculaires à l'axe du stator, soit chacune selon une combinaison d'un décalage parallèle à l'axe du stator et d'un autre décalage le long d'une direction radiale perpendiculaire audit axe du stator, entre la surface d'intrados (SI) d'un élément de carénage (33) du stator et la surface d'extrados (SE) de l'élément de carénage suivant du stator en tournant progressivement autour de l'axe du stator.

8. Turbomachine (100) selon la revendication 6 ou 7, de l'un des types suivants :
- une turbomachine aéronautique, y compris un turboréacteur, un turbopropulseur à double flux ou un turbomoteur à compresseur centrifuge,
- une turbomachine de soufflerie terrestre, ou
- une turbomachine destinée à produire de l'énergie électrique,
et dans laquelle l'élément de carénage (33) est situé au niveau d'un compresseur de la turbomachine (100), ou entre le compresseur et une zone de combustion de la turbomachine, ou au niveau d'une turbine de ladite turbomachine en aval de la zone de combustion, ou dans un passage secondaire de gaz en aval d'une soufflante (11) qui est destinée à être entraînée en rotation par ladite turbomachine.

9. Procédé de fabrication d'un élément de carénage (33) destiné à être placé dans un passage d'écoulement d'un fluide, et destiné à entourer un obstacle (31) qui traverse le passage de sorte que l'élément de carénage guide l'écoulement du fluide sur deux côtés opposés de l'obstacle, le procédé comprenant les étapes suivantes :
/1/ recueillir des valeurs nominales de plusieurs paramètres de l'écoulement, dont au moins une densité du fluide, des variations respectives d'une section (S) et d'un rayon moyen (rₘ) du passage le long de l'écoulement, un sens de l'écoulement dans le passage, une valeur de vitesse de l'écoulement, et un angle d'incidence de l'écoulement par rapport à l'obstacle (31) en amont dudit obstacle ;
/2/ déterminer une surface d'extrados (SE) et une surface d'intrados (SI) de l'élément de carénage (33), avec un bord d'attaque (LE) qui forme une arête de jonction entre les surfaces d'extrados et d'intrados, et qui est destiné à être situé en amont de l'obstacle (31) par rapport à l'écoulement ; et
/3/ fabriquer l'élément de carénage (33) conformément aux surfaces d'extrados (SE) et d'intrados (SI) déterminées à l'étape /2/,
le procédé étant **caractérisé en ce qu'**une forme de la surface d'extrados (SE) est déterminée à l'étape 121 pour produire, au sein d'une partie du fluide qui s'écoule le long de ladite surface d'extrados conformément aux valeurs nominales recueillies à l'étape /1/, des variations de pression qui sont inférieures à 5% en valeurs absolues, d'une valeur de pression du fluide dans l'écoulement qui existe au niveau du bord d'attaque (LE), lorsque lesdites variations de pression sont déterminées entre deux points quelconques de ladite surface d'extrados situés entre le bord d'attaque et une zone de l'élément de carénage, appelée zone de transition (ZE_{TZ}), où une épaisseur locale dudit élément de carénage entre les surfaces d'extrados (SE) et d'intrados (SI) est comprise entre 50% et 100% d'une épaisseur maximale (e₃₁) de l'obstacle (31), lesdites épaisseurs étant mesurées transversalement par rapport à l'écoulement.

10. Procédé selon la revendication 9, suivant lequel l'élément de carénage (33) est conforme à l'une quelconque des revendications 1 à 5.

11. Procédé selon la revendication 9 ou 10, suivant lequel la forme de la surface d'extrados (SE) telle que déterminée à l'étape 121 résulte d'une combinaison de plusieurs contributions de convexité le long de lignes de courant, dans une partie de ladite surface d'extrados qui est située entre le bord d'attaque (LE) et la zone de transition (SE_{TZ}), parmi lesquelles :
- une première contribution de convexité, qui est une fonction croissante d'une réduction d'une section du passage (S) de long de l'écoulement ; et
- une seconde contribution de convexité, qui est une autre fonction croissante d'une augmentation d'un rayon moyen (rₘ) du passage le long de l'écoulement.

12. Procédé selon l'une quelconque des revendications 9 à 11, suivant lequel, à l'étape /2/, une partie amont (SEu) de la surface d'extrados (SE) de l'élément de carénage (33), qui est située entre le bord d'attaque (LE) et la zone de transition (ZE_{TZ}), est déterminée de la façon suivante :
/a/ déterminer d'abord une trace dans le passage d'écoulement du fluide, pour relier deux parois (22, 23) opposées qui limitent ledit passage d'écoulement, ladite trace étant destinée à être superposée au bord d'attaque (LE) de l'élément de carénage (33) ;
/b/ pour chaque point de la trace, une direction d'une vitesse vectorielle de l'écoulement audit point, conformément aux valeurs nominales des paramètres de l'écoulement, constitue une direction qui est tangente à la surface d'extrados (SE) de l'élément de carénage (33) au niveau du bord d'attaque (LE) ; et
/c/ la surface d'extrados (SE) de l'élément de carénage (33) est ensuite prolongée de proche en proche à partir du bord d'attaque (LE) jusqu'à la zone de transition (SE_{TZ}), pour rester tangente en chaque point à la vitesse vectorielle de l'écoulement audit point, lorsque l'écoulement est encore conforme aux valeurs nominales des paramètres, la partie amont (SEu) de la surface d'extrados étant ainsi construite jusqu'à la zone de transition ;
l'étape 121 comprenant en outre :
/d/ déterminer une forme de la surface d'extrados (SE) dans la zone de transition (SE_{TZ}), ainsi qu'une partie aval (SE_{D}) de la surface d'extrados, qui est située d'un côté de la zone de transition opposé à la partie amont (SEu) de ladite surface d'extrados, et aussi une surface d'intrados (SI) de l'élément de carénage (33), pour entourer l'obstacle (31).

13. Procédé selon l'une quelconque des revendications 9 à 12, suivant lequel les valeurs nominales des paramètres de l'écoulement du fluide sont définies par un écoulement identifié dudit fluide dans le passage d'écoulement lorsque ledit passage d'écoulement ne comporte pas d'obstacle (31) ni d'élément de carénage (33).

14. Procédé selon l'une quelconque des revendications 9 à 13, suivant lequel l'élément de carénage (33) est destiné à être incorporé dans une turbomachine (100) qui est conforme à l'une quelconque des revendications 6 à 8.

## Patentansprüche

1. Verkleidungselement (33), das dazu bestimmt ist, in einem Kanal für eine Fluidströmung platziert zu werden, und dazu bestimmt ist, ein Hindernis (31) zu umgeben, das durch den Kanal verläuft, so dass das Verkleidungselement die Fluidströmung auf zwei gegenüberliegenden Seiten des Hindernisses leitet,
wobei das Verkleidungselement (33) für Nennwerte mehrerer Strömungsparameter ausgebildet ist, darunter mindestens eine Dichte des Fluids, jeweilige Änderungen eines Querschnitts (S) und eines mittleren Radius (rₘ) des Kanals entlang der Strömung, eine Richtung der Strömung im Kanal, ein Strömungsgeschwindigkeitswert und ein Einfallswinkel der Strömung in Bezug auf das Hindernis (31) stromaufwärts des Hindernisses,
wobei das Verkleidungselement (33) eine Saugseitenoberfläche (SE) und eine Druckseitenoberfläche (SI) sowie eine Führungskante (LE) besitzt, die eine Verbindungskante zwischen der Saugseiten- und der Druckseitenoberfläche bildet und die dazu bestimmt ist, sich in Bezug auf die Strömung stromaufwärts des Hindernisses (31) zu befinden,
wobei das Verkleidungselement (33) **dadurch gekennzeichnet ist, dass** die Saugseitenoberfläche (SE) eine Form besitzt, die dazu geeignet ist, innerhalb eines Teils des Fluids, das entlang der Saugseitenoberfläche strömt, gemäß den Nennwerten Druckschwankungen eines Fluiddruckwerts in der Strömung, die an der Führungskante (LE) vorhanden ist, zu erzeugen, die in absoluten Werten weniger als 5 % betragen, wenn die Druckschwankungen zwischen zwei beliebigen Punkten auf der Saugseitenoberfläche bestimmt werden, die sich zwischen der Führungskante und einer Zone des Verkleidungselements, der sogenannten Übergangszone (SE_{TZ}), befinden, wo eine lokale Dicke des Verkleidungselements zwischen der Saugseitenoberfläche (SE) und der Druckseitenoberfläche (SI) zwischen 50 % und 100 % einer maximalen Dicke (e₃₁) des Hindernisses (31) beträgt, wobei die Dicken in Bezug auf die Strömung quer gemessen werden.

2. Verkleidungselement (33) nach Anspruch 1, wobei die Saugseitenoberfläche (SE) zwischen der Führungskante (LE) und der Übergangszone (SE_{TZ}) entlang einer Stromlinie der Strömung, die der Saugseitenoberfläche folgt, konkav oder konvex ist.

3. Verkleidungselement (33) nach Anspruch 1 oder 2, wobei die Krümmungswerte der Saugseitenoberfläche (SE) zwischen zwei Stromlinien, die die Führungskante (LE) an verschiedenen Punkten auf der Führungskante kreuzen, unterschiedlich sind, wobei die Krümmungswerte in Ebenen gemessen werden, die parallel zu den Stromlinien und senkrecht zu der Saugseitenoberfläche sind.

4. Verkleidungselement (33) nach einem der vorhergehenden Ansprüche, wobei mindestens ein Teil der Saugseitenoberfläche (SE), der sich stromabwärts der Übergangszone (SE_{TZ}) befindet, und die Druckseitenoberfläche (SI) jeweilige Formen aufweisen, die dazu geeignet sind, eine Neigungsänderung der Strömung zwischen einer ersten Zone des Kanals stromaufwärts des Verkleidungselements und einer zweiten Zone des Kanals stromabwärts des Verkleidungselements zu erzeugen.

5. Verkleidungselement (33) nach einem der vorhergehenden Ansprüche, wobei die Form der Saugseitenoberfläche (SE) so ausgelegt ist, dass die Druckschwankungen, die innerhalb des Teils des Fluids, der entlang der Saugseitenoberfläche strömt, zwischen zwei beliebigen Punkten auf der Saugseitenoberfläche, die sich zwischen der Führungskante (LE) und der Übergangszone (SE_{TZ}) befinden, erzeugt werden, in absoluten Werten weniger als 3 %, vorzugsweise weniger als 2 %, des Fluiddruckwerts in der Strömung, die an der Führungskante vorhanden ist, beträgt.

6. Turbomaschine (100), die einen Rotor (12), einen Stator (20) und einen Kanal für eine Gasströmung, der durch den Rotor und den Stator verläuft, umfasst, wobei die Turbomaschine ferner mindestens ein Hindernis (31), das sich durch den Kanal hindurch erstreckt, und mindestens ein Verkleidungselement (33) umfasst, das einem der vorhergehenden Ansprüche entspricht und das Hindernis umgibt.

7. Turbomaschine (100) nach Anspruch 6, wobei der Stator (20) eine Vielzahl von Begradigungsleitschaufeln (21) für die Strömung umfasst, die im Winkel um eine Achse (A-A) des Stators verteilt sind, und ferner das mindestens eine Verkleidungselement (33) umfasst, wobei jedes Verkleidungselement des Stators Anspruch 4 entspricht,
und wobei die Begradigungsleitschaufeln (21) des Stators (20) nicht nur winkelmäßig um die Achse des Stators versetzt sind, sondern auch progressiv entweder parallel zur Achse (A-A) des Stators oder entlang radialer Richtungen senkrecht zur Achse des Stators oder jeweils entlang einer Kombination aus einem Versatz parallel zur Achse des Stators und einem weiteren Versatz entlang einer radialen Richtung senkrecht zur Achse des Stators zwischen der Druckseitenoberfläche (SI) eines Verkleidungselements (33) des Stators und der Saugseitenoberfläche (SE) des nächsten Verkleidungselements des Stators, wenn sie sich fortschreitend um die Achse des Stators drehen, versetzt sind.

8. Turbomaschine (100) nach Anspruch 6 oder 7 eines der folgenden Typen:
- einer Flugzeugturbomaschine, einschließlich eines Turbostrahltriebwerks, eines zweistrahligen Turboproptriebwerks oder eines Turbinentriebwerks mit Radialverdichter,
- einer Windkanal-Turbomaschine, oder
- einer Turbomaschine, die dazu bestimmt ist, elektrische Energie zu erzeugen,
und wobei sich das Verkleidungselement (33) an einem Kompressor der Turbomaschine (100) oder zwischen dem Kompressor und einer Verbrennungszone der Turbomaschine oder an einer Turbine der Turbomaschine stromabwärts der Verbrennungszone oder in einem sekundären Gaskanal stromabwärts eines Gebläses (11) befindet, das dazu bestimmt ist, von der Turbomaschine in Rotation versetzt zu werden.

9. Verfahren zum Herstellen eines Verkleidungselements (33), das dazu bestimmt ist, in einem Kanal für eine Fluidströmung platziert zu werden, und dazu bestimmt ist, ein Hindernis (31) zu umgeben, das durch den Kanal verläuft, so dass das Verkleidungselement die Fluidströmung auf zwei gegenüberliegenden Seiten des Hindernisses leitet, wobei das Verfahren die folgenden Schritte umfasst:
/1/ Erfassen von Nennwerten mehrerer Strömungsparameter, darunter mindestens eine Dichte des Fluids, jeweilige Änderungen eines Querschnitts (S) und eines mittleren Radius (rₘ) des Kanals entlang der Strömung, eine Richtung der Strömung im Kanal, ein Strömungsgeschwindigkeitswert und ein Einfallswinkel der Strömung in Bezug auf das Hindernis (31) stromaufwärts des Hindernisses;
/2/ Bestimmen einer Saugseitenoberfläche (SE) und einer Druckseitenoberfläche (SI) des Verkleidungselements (33) mit einer Führungskante (LE), die eine Verbindungskante zwischen der Saugseiten- und der Druckseitenoberfläche bildet und die dazu bestimmt ist, sich in Bezug auf die Strömung stromaufwärts des Hindernisses (31) zu befinden; und
/3/ Fertigen des Verkleidungselements (33) entsprechend der in Schritt /2/ bestimmten Saugseitenoberfläche (SE) und Druckseitenoberfläche (SI),
wobei das Verfahren **dadurch gekennzeichnet ist, dass** in Schritt 121 eine Form der Saugseitenoberfläche (SE) bestimmt wird, um innerhalb eines Teils des Fluids, das entlang der Saugseitenoberfläche strömt, gemäß den in Schritt /1/ erfassten Nennwerten Druckschwankungen eines Fluiddruckwerts in der Strömung, die an der Führungskante (LE) vorhanden ist, zu erzeugen, die in absoluten Werten weniger als 5 % betragen, wenn die Druckschwankungen zwischen zwei beliebigen Punkten auf der Saugseitenoberfläche bestimmt werden, die sich zwischen der Führungskante und einer Zone des Verkleidungselements, der sogenannten Übergangszone (ZE_{TZ}), befinden, wo eine lokale Dicke des Verkleidungselements zwischen der Saugseitenoberfläche (SE) und der Druckseitenoberfläche (SI) zwischen 50 % und 100 % einer maximalen Dicke (e₃₁) des Hindernisses (31) beträgt, wobei die Dicken in Bezug auf die Strömung quer gemessen werden.

10. Verfahren nach Anspruch 9, wobei das Verkleidungselement (33) einem der Ansprüche 1 bis 5 entspricht.

11. Verfahren nach Anspruch 9 oder 10, wobei die wie in Schritt 121 bestimmte Form der Saugseitenoberfläche (SE) aus einer Kombination mehrerer Konvexitätsbeiträge entlang von Stromlinien in einem Teil der Saugseitenoberfläche resultiert, der sich zwischen der Führungskante (LE) und der Übergangszone (SE_{TZ}) befindet, darunter Folgende:
- ein erster Konvexitätsbeitrag, der eine wachsende Funktion einer Verringerung eines Querschnitts des Kanals (S) entlang der Strömung ist; und
- ein zweiter Konvexitätsbeitrag, der eine weitere wachsende Funktion einer Zunahme eines mittleren Radius (rₘ) des Kanals entlang der Strömung ist.

12. Verfahren nach einem der Ansprüche 9 bis 11, gemäß dem im Schritt 121 ein stromaufwärts gelegener Teil (SEu) der Saugseitenoberfläche (SE) des Verkleidungselements (33), der sich zwischen der Führungskante (LE) und der Übergangszone (ZE_{TZ}) befindet, wie folgt bestimmt wird:
/a/ zunächst Bestimmen eine Spur im Strömungskanal des Fluids, um zwei gegenüberliegende Wände (22, 23) zu verbinden, die den Strömungskanal begrenzen, wobei die Spur dazu bestimmt ist, auf der Führungskante (LE) vom Verkleidungselement (33) überlagert zu werden;
/b/ für jeden Punkt der Spur stellt eine Richtung einer Vektorgeschwindigkeit der Strömung an diesem Punkt entsprechend den Nennwerten der Strömungsparameter eine Richtung dar, die tangential zur Saugseitenoberfläche (SE) des Verkleidungselements (33) an der Führungskante (LE) ist; und
/c/ die Saugseitenoberfläche (SE) des Verkleidungselements (33) wird anschließend schrittweise von der Führungskante (LE) bis zur Übergangszone (SE_{TZ}) erweitert, um an jedem Punkt tangential zur Vektorgeschwindigkeit der Strömung an diesem Punkt zu bleiben, wenn die Strömung noch den Nennwerten der Parameter entspricht, wobei der stromaufwärts gelegene Teil (SEu) der Saugseitenoberfläche somit bis zur Übergangszone aufgebaut wird;
wobei Schritt 121 ferner Folgendes umfasst:
/d/ Bestimmen einer Form der Saugseitenoberfläche (SE) in der Übergangszone (SE_{TZ}) sowie eines stromabwärts gelegenen Teils (SE_{D}) der Saugseitenoberfläche, der sich auf einer Seite der Übergangszone befindet, die dem stromaufwärts gelegenen Teil (SEu) der Saugseitenoberfläche gegenüberliegt, und auch einer Druckseitenoberfläche (SI) des Verkleidungselements (33), um das Hindernis (31) zu umgeben.

13. Verfahren nach einem der Ansprüche 9 bis 12, gemäß dem die Nennwerte der Strömungsparameter des Fluids durch eine identifizierter Strömung des Fluids im Strömungskanal definiert werden, wenn der Strömungskanal weder ein Hindernis (31) noch ein Verkleidungselement (33) umfasst.

14. Verfahren nach einem der Ansprüche 9 bis 13, gemäß dem das Verkleidungselement (33) dazu bestimmt ist, in eine Turbomaschine (100) integriert zu werden, die einem der Ansprüche 6 bis 8 entspricht.

## Claims

1. Fairing element (33) intended to be placed in a flow passage for a fluid, and intended to surround an obstacle (31) that traverses the passage such that the fairing element guides the flow of the fluid on two opposite sides of the obstacle,
the fairing element (33) being designed for nominal values of several parameters of the flow, of which at least one fluid density, respective variations of a section (S) and of an average radius (rₘ) of the passage along the flow, a direction of the flow in the passage, a speed value of the flow, and an incidence angle of the flow with respect to the obstacle (31) upstream of said obstacle,
the fairing element (33) having an extrados surface (SE) and an intrados surface (SI), and a leading edge (LE) that forms a junction ridge between the extrados and intrados surfaces, and which is intended to be located upstream of the obstacle (31) with respect to the flow,
the fairing element (33) being **characterised in that** the extrados surface (SE) has an adapted shape to produce, within a part of the fluid that flows along said extrados surface in according with the nominal values, pressure variations that are less than 5% in absolute values, of a pressure value of the fluid in the flow that exists at the leading edge (LE), when said pressure variations are determined between any two points of the extrados surface that are located between the leading edge and a zone of the fairing element, called transition zone (SE_{TZ}), where a local thickness of said fairing element between the extrados (SE) and intrados (SI) surfaces is comprised between 50% and 100% of a maximum thickness (e₃₁) of the obstacle (31), said thicknesses being measured transversally with respect to the flow.

2. Fairing element (33) according to claim 1, wherein the extrados surface (SE) is concave or convex between the leading edge (LE) and the transition zone (SE_{TZ}), along a current line of the flow that follows said extrados surface.

3. Fairing element (33) according to claim 1 or 2, wherein curvature values of the extrados surface (SE) are different between two current lines that cross the leading edge (LE) at different points of said leading edge, said curvature values being measured in planes parallel to the current lines and perpendicular to the extrados surface.

4. Fairing element (33) according to any one of the preceding claims, wherein a part at least of the extrados surface (SE), which is located downstream of the transition zone (SE_{TZ}), and the intrados surface (SI) have respective shapes that are adapted to produce a change of inclination of the flow between a first zone of the passage upstream of the fairing element and a second zone of the passage downstream of said fairing element.

5. Fairing element (33) according to any one of the preceding claims, wherein the shape of the extrados surface (SE) is adapted such that the pressure variations that are produced within the part of the fluid that flows along said extrados surface, between any two points of the extrados surface that are located between the leading edge (LE) and the transition zone (SE_{TZ}), are less than 3%, preferably less than 2%, in absolute values, of the pressure value of the fluid in the flow that exists at the leading edge.

6. Turbomachine (100) comprising a rotor (12), a stator (20) and a passage for flow of gas that traverses the rotor and the stator, said turbomachine further comprising at least one obstacle (31) that extends through the passage, and at least one fairing element (33) that is in accordance with any one of the preceding claims and which surrounds the obstacle.

7. Turbomachine (100) according to claim 6, wherein the stator (20) comprises a plurality of vanes (21) for straightening the flow, which are spread out angularly around an axis (A-A) of the stator, and further comprises the at least one fairing element (33), each fairing element of the stator being in accordance with claim 4,
and wherein the straightener vanes (21) of the stator (20), in addition to being angularly offset around the axis of said stator, are progressively offset either parallel to the axis (A-A) of said stator, or along radial directions perpendicular to the axis of the stator, or each along a combination of one offset parallel to the axis of the stator and of another offset along a radial direction perpendicular to said stator axis, between the intrados surface (SI) of a fairing element (33) of the stator and the extrados surface (SE) of the following fairing element of the stator while turning progressively around the axis of the stator.

8. Turbomachine (100) according to claim 6 or 7, of one of the following types
- an aeronautic turbomachine, including a turbojet, a bypass turboprop or a centrifugal compressor turbine engine,
- a terrestrial wind tunnel turbomachine, or
- a turbomachine intended to produce electrical energy,
and wherein the fairing element (33) is located at a compressor of the turbomachine (100), or between the compressor and a combustion zone of the turbomachine, or at a turbine of said turbomachine downstream of the combustion zone, or in a secondary gas passage downstream of a fan (11) that is intended to be rotationally driven by said turbomachine.

9. Method for manufacturing a fairing element (33) intended to be placed in a passage for flow of a fluid, and intended to surround an obstacle (31) that traverses the passage such that the fairing element guides the flow of the fluid on two opposite sides of the obstacle, the method comprising the following steps:
/1/ collecting nominal values of several parameters of the flow, of which at least one fluid density, respective variations of a section (S) and of an average radius (rₘ) of the passage along the flow, a direction of the flow in the passage, a speed value of the flow, and an angle of incidence of the flow with respect to the obstacle (31) upstream of said obstacle;
/2/ determining an extrados surface (SE) and an intrados surface (SI) of the fairing element (33), with a leading edge (LE) that forms a junction ridge between the extrados and intrados surfaces, and which is intended to be located upstream of the obstacle (31) with respect to the flow; and
/3/ manufacturing the fairing element (33) in accordance with the extrados (SE) and intrados (SI) surfaces determined at step 121,
the method being **characterised in that** a shape of the extrados surface (SE) is determined at step 121 to produce, within a part of the fluid that flows along said extrados surface in accordance with the nominal values collected at step /1/, pressure variations that are less than 5% in absolute values, of a pressure value of the fluid in the flow that exists at the leading edge (LE), when said pressure variations are determined between any two points of said extrados surface located between the leading edge and a zone of the fairing element, called transition zone (ZE_{TZ}), where a local thickness of said fairing element between the extrados (SE) and intrados (SI) surfaces is comprised between 50% and 100% of a maximum thickness (e₃₁) of the obstacle (31), said thicknesses being measured transversally with respect to the flow.

10. Method according to claim 9, according to which the fairing element (33) is in accordance with any one of claims 1 to 5.

11. Method according to claim 9 or 10, according to which the shape of the extrados surface (SE) such as determined in step 121 results from a combination of several convexity contributions along current lines, in a part of said extrados surface that is located between the leading edge (LE) and the transition zone (SE_{TZ}), among which:
- a first convexity contribution, which is an increasing function of a reduction of a section of the passage (S) along the flow; and
- a second convexity contribution, which is another increasing function of an increase in the average radius (rₘ) of the passage along the flow.

12. Method according to any one of claims 9 to 11, according to which, at step 121, an upstream part (SEu) of the extrados surface (SE) of the fairing element (33), which is located between the leading edge (LE) and the transition zone (ZE_{TZ}), is determined in the following manner:
/a/ firstly determining a trace in the flow passage of the fluid, to connect two opposite walls (22, 23) that limit said flow passage, said trace being intended to be superimposed on the leading edge (LE) of the fairing element (33);
/b/ for each point of the trace, a direction of a vectorial speed of the flow at said point, in accordance with the nominal values of the parameters of the flow, constitutes a direction that is tangential to the extrados surface (SE) of the fairing element (33) at the leading edge (LE); and
/c/ the extrados surface (SE) of the fairing element (33) is then prolonged step by step from the leading edge (LE) up to the transition zone (SE_{TZ}) to remain tangential at each point to the vectorial speed of the flow at said point, when the flow is still in accordance with the nominal values of the parameters, the upstream part (SEu) of the extrados surface thereby being constructed up to the transition zone; step 121 further comprising:
/d/ determining a shape of the extrados surface (SE) in the transition zone (SE_{TZ}), as well as a downstream part (SE_{D}) of the extrados surface, which is located on one side of the transition zone opposite the upstream part (SEu) of said extrados surface, and also an intrados surface (SI) of the fairing element (33), to surround the obstacle (31).

13. Method according to any one of claims 9 to 12, according to which the nominal values of the parameters of the flow of the fluid are defined by an identified flow of said fluid in the flow passage when said flow passage does not include an obstacle (31) or fairing element (33).

14. Method according to any one of claims 9 to 13, according to which the fairing element (33) is intended to be incorporated in a turbomachine (100) that is in accordance with any one of claims 6 to 8.
